# EUROPÄISCHE PATENTANMELDUNG

(11) **EP 1 262 403 A2**
(43) Veröffentlichungstag der Anmeldung: **04.12.2002**
(21) Anmeldenummer: 02010996.3
(22) Anmeldetag: 17.05.2002
(51) Int. Cl.: B64C 27/605

(54) **Individuelle Rotorblatt-Steuerungsvorrichtung**

(30) Priorität: 23.05.2001 DE 10125178
(71) Anmelder: ZF Luftfahrttechnik GmbH, 34379 Calden (DE)
(72) Erfinder: Arnold, Uwe, 34121 Kassel (DE)
(74) Vertreter: Zietlow, Karl-Peter

(57) **Zusammenfassung**

Bei einer individuellen Rotorblatt-Steuerungsvorrichtung für einen Hubschrauber-Hauptrotor mit einem von einem Hauptgetriebe drehantreibbaren Rotormast, mit einer geraden Anzahl von am Umfang einer Rotornabe angeordneten Rotorblättern, mit Primär-Steuermitteln zur kollektiven und sinusförmigen, zyklischen Rotorblatt-Verstellung, welche ein Übertragungsmittel für Steuerbewegungen von einem nichtdrehenden System in ein drehendes System aufweisen, und mit den Rotorblättern individuell zugeordneten Aktuatoren, deren Steuerbewegung der Steuerbewegung der Primär-Steuermittel überlagert ist, wobei jeder Aktuator ein Sicherungsmittel aufweist, um ihn bedarfsweise in eine Endlage zu bringen und in dieser festzuhalten, wird vorgeschlagen, dass die Einstellwinkel-Änderung der Hälfte der Rotorblätter infolge der Sicherung der Aktuatoren in ihren Endlagen entgegengesetzte Richtung aufweist, wie die Einstellwinkel-Änderung der anderen Hälfte der Rotorblätter, und dass die Rotorblätter jeder Hälfte so am Umfang verteilt sind, dass keine auf den Rotor wirkenden Kippmomente erzeugt werden.

## Beschreibung

Die Erfindung betrifft eine individuelle Rotorblatt-Steuerungsvorrichtung nach dem Oberbegriff des Hauptanspruchs.

Übliche Steuerungsvorrichtungen für Hubschrauber-Hauptrotoren weisen eine Taumelscheibe zur Übertragung von Steuerbewegungen des Piloten vom nichtdrehenden System der Hubschrauber-Zelle in das während des Betriebs drehende System des Hauptrotors auf. Die Taumelscheibe ist gegenüber dem Rotormast zur sinusförmigen, monozyklischen Rotorblattverstellung nach allen Seiten kippbar und zur kollektiven Rotorblatt-Verstellung axial verschiebbar gelagert. Die Taumelscheibe, die als Primärsteuermittel dient, wird von mehreren, unterhalb der Taumelscheibe angeordneten Stellgliedern bzw. Steuerstangen betätigt.

Ein niedrigeres Vibrationsniveau, bessere Flugleistungen und eine geringere Geräuschemission können erzielt werden, indem der kollektiven und sinusförmigen, monozyklischen Einstellwinkel-Verstellung weitere Einstellwinkel-Änderungen überlagert werden, um beispielsweise rotorblattinduzierten Schwingungen entgegenzuwirken. Hierzu sind den Rotorblättern individuell zugeordnete Aktuatoren vorgesehen, deren Steuerbewegung der Steuerbewegung der Taumelscheibe überlagert ist. Aus Sicherheitsgründen weist jeder Aktuator ein Sicherungsmittel auf, um ihn bedarfsweise in eine vorgegebene Lage zu bringen, und in dieser festzuhalten. Die Aktuatoren können beispielsweise zwischen dem drehenden Teil der Taumelscheibe und den Anschlüssen der einzelnen Rotorblätter - den Blatthörnern - angeordnet sein. Sind sie durch die Sicherungsmittel blockiert, wirken sie wie einfache Steuerstangen, so dass die Steuerbewegungen der Taumelscheibe auch bei abgeschalteten Aktuatoren zuverlässig übertragen werden können.

Aus Blaas, Eisbrecher, "Aufbau und Untersuchung einer aktiven Rotorblattsteuerung", BMFT-Schlußbericht, Dezember 1990, ist ein hydraulischer Aktuator offenbart, der eine in Stellrichtung wirkende Feder aufweist, welche dazu dient, den Aktuator bedarfsweise in eine Endlage zu bringen und in dieser festzuhalten. Dieser Aktuator zeichnet sich durch einen einfachen konstruktiven Aufbau aus. Nachteilig bei dem System der Sicherung in einer Endlage ist, dass, wenn die Sicherung ausgelöst wird, alle Aktuatoren ihre Endlage einnehmen und dabei alle Rotorblätter eine gleichartige Einstellwinkel-Änderung erfahren. Dieser sogenannte Kollektivsprung bewirkt eine plötzliche Änderung des vom Hubschrauber-Hauptrotor erzeugten Schubs, welche insbesondere bei Flug in Bodenähe problematisch ist.

Aus diesem Grund sind Steller entwickelt worden, die eine Sicherungseinrichtung aufweisen, welche die Steller in einer Mittenposition festhalten, sofern jene ausgelöst wird. Der Aufbau dieser Steller ist aufwendiger und das Gewicht größer.

Der Erfindung liegt die Aufgabe zugrunde, eine individuelle Rotorblatt-Steuerungsvorrichtung mit einfach aufgebauten Aktuatoren anzugeben, bei welcher die negativen Auswirkungen eines Kollektivsprungs vermieden werden.

Diese Aufgabe wird durch eine Rotorblatt-Steuerungsvorrichtung mit den Merkmalen des Hauptanspruchs gelöst. Durch die entgegengesetzten Einstellwinkel-Beträge, die sich ergeben, wenn die Aktuatoren ihre Endlagen einnehmen, ergeben sich zwar unterschiedliche Auftriebswerte an den einzelnen Rotorblättern und ein entsprechend abweichender Spurlauf. Auf den gesamten Rotor bezogen, heben sich die flugmechanischen Auswirkungen der einzelnen Einstellwinkel-änderungen jedoch gegenseitig auf.

In einer vorteilhaften Ausgestaltung der Erfindung weisen die Einstellwinkel-Änderungen benachbarter Rotorblätter infolge der Sicherung der Aktuatoren in ihren Endlagen entgegengesetzte Richtung auf, so dass jeweils von Blatt zu Blatt alternierende Einstellwinkel-Änderungen eintreten. Bei Rotorblattzahlen von mehr als Sechs erfüllen auch andere Verteilungen der Rotorblätter das Kriterium, dass sich die flugmechanischen Wirkungen gegenseitig aufheben, dass also keine umlaufenden Rotorkippmomente auftreten. Dabei muss lediglich gewährleistet sein, dass die jeweils halbe Anzahl der Rotorblätter infolge der Sicherung der Aktuatoren in entgegengesetzte Richtung verstellt wird und dass außerdem alle Rotorblätter, die in eine Richtung verstellt werden, in gleichmäßig am Umfang verteilte Untergruppen aufgeteilt sind. Im einfachsten Fall, also bei von Blatt zu Blatt alternierendem Ausfallwinkel, bestehen diese Untergruppen aus nur jeweils einem Rotorblatt.

In einer weiteren Ausgestaltung der Erfindung ist jeder der Aktuatoren als Linear-Aktuator mit zwei zueinander beweglichen Baugruppen ausgebildet, wobei jede Baugruppe einen Anlenkpunkt aufweist und die Anlenkpunkte in einer ersten Endlage minimalen Abstand und in einer zweiten Endlage maximalen Abstand voneinander aufweisen. Grundsätzlich ist die Erfindung jedoch auch mit anderen Aktuator-Bauformen, wie z. B. Drehstellern, zu verwirklichen.

In einer Weiterführung der Erfindung kommen zwei Bauformen von Aktuatoren zum Einsatz, wobei benachbart zu einem Rotorblatt mit einem Aktuator, welcher in der ersten Endlage festhaltbar ist, ein Rotorblatt mit einem Aktuator, welcher in der zweiten Endlage festhaltbar ist, angeordnet ist. Bei dieser Ausgestaltung können die Anschlüsse der Aktuatoren an der Taumelscheibe bzw. an den einzelnen Rotorblättern für jedes Rotorblatt baugleich ausgeführt werden. Es ist jedoch auch möglich, baugleiche Aktuatoren zu verwenden, die alle in derselben Endlage festhaltbar sind und die entgegengesetzte Einstellwinkel-Änderung dadurch zu bewirken, dass die Hälfte der Aktuatoren mit einem Umlenkglied versehen ist.

In einer Ausgestaltung der Erfindung weist das Sicherungsmittel ein parallel zur Stellrichtung des Aktuators expandierbares, elastisch vorgespanntes Element, z. B. eine Feder, auf, welches zwischen den beiden zueinander beweglichen Baugruppen des Aktuators angeordnet ist und dazu dient, die Baugruppen in eine Endlage zu bringen und in dieser festzuhalten. Anstelle einer Feder kann auch ein vorgespannter Gasdruckspeicher verwendet werden.

Die Erfindung wird anhand der beiliegenden Zeichnungen näher erläutert, wobei
- Fig. 1: einen Rotorkopf mit sechs in alternierenden Endlagen festgehaltenen Aktuatoren;
- Fig. 2: einen Schnitt durch einen in einer Endlage festhaltbaren Aktuator und
- Fig. 3: die möglichen Endlagen-Anordnungen für Rotorköpfe mit vier, sechs, acht und zwölf Rotorblättern
zeigen.

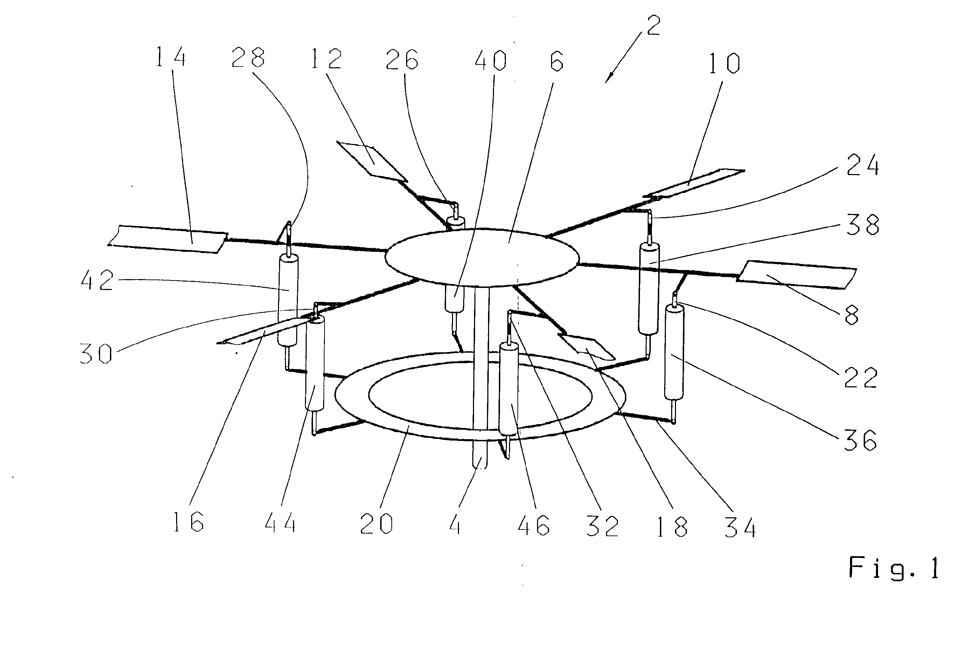

In Fig. 1 ist mit 2 ein Hubschrauber-Hauptrotor bezeichnet. Der Rotormast 4, der von einem nicht dargestellten Hauptgetriebe antreibbar ist, trägt eine Rotornabe 6, an deren Umfang gleichmäßig verteilt sechs Rotorblätter 8, 10, 12, 14, 16, 18 angeordnet sind. Zur kollektiven und monozyklischen Rotorblatt-Verstellung ist eine Taumelscheibe 20 vorgesehen, welche durch nicht dargestellte Steuerelemente gegenüber dem Rotormast linear verschiebbar und in alle Richtungen kippbar ist. An dem gezeigten drehenden Teil 20 der Taumelscheibe ist für jedes Rotorblatt 8, 10, 12, 14, 16, 18 ein Anlenkpunkt 34 vorgesehen. Der Einstellwinkel jedes Rotorblatts ist durch Einsteuerung einer Vertikalbewegung an dem zugeordneten Blatthorn 22, 24, 26, 28, 30, 32 steuerbar. Zwischen den Blatthörnern 22, 24, 26, 28, 30, 32 und den Anlenkpunkten 34 an der Taumelscheibe 20 ist jeweils ein Linear-Aktuator 36, 38, 40, 42, 44, 46 angeordnet. Diese Linear-Aktuatoren ersetzen die bei konventionellen Hubschrauber-Rotorköpfen ohne individuelle Rotorblatt-Steuerung an dieser Stelle angeordneten Steuerstangen. Die Aktuatoren 36, 38, 40, 42, 44, 46 dienen zum einen als Übertragungsglied der kollektiven und sinusförmigen, monozyklischen Steuerbewegungen, die von der Taumelscheibe 20 eingesteuert werden und sind außerdem in ihrer Länge veränderbar, so dass zusätzlich höherharmonische Steuerbewegungen erzeugt werden können.

Jeder der Aktuatoren 36 bis 46 weist ein Sicherungsmittel auf, welches dazu dient, ihn bedarfsweise in eine Endlage zu bringen und in dieser festzuhalten. Sind die Aktuatoren hierdurch in einer Endlage gesichert, dienen sie sozusagen als starre Steuerstangen und der Hubschrauber bleibt über die Taumelscheibe 20 steuerbar, auch wenn eine Störung an dem System zur individuellen Rotorblatt-Verstellung auftritt.

Fig. 1 zeigt einen Zustand, in dem die Rotorblätter 8, 12, 16 eine Gruppe bilden, bei welcher die Einstellwinkel-Änderungen infolge der Sicherung der Aktuatoren in ihren Endlagen die gleiche Richtung aufweisen. Die einzelnen Rotorblätter 8, 12, 16 dieser Gruppe sind gleichmäßig am Umfang der Rotornabe verteilt angeordnet. Die Rotorblätter 10, 14, 18 bilden eine zweite Gruppe von Rotorblättern, deren Rotorblätter infolge der Sicherung der Aktuatoren 38, 42, 46 in ihren Endlagen entgegengesetzte Richtung aufweisen. Auch die Rotorblätter dieser zweiten Gruppe sind gleichmäßig am Umfang verteilt angeordnet, so dass keine Kippmomente auf den Rotor ausgeübt werden. Die Beträge der positiven Einstellwinkel-Änderungen der ersten Gruppe von Rotorblättern und der negativen Einstellwinkel-Änderungen der zweiten Gruppe von Rotorblättern sind so bemessen, dass die aus den Einstellwinkel-Änderungen resultierenden positiven und negativen Schubanteile sich zumindest weitgehend gegenseitig aufheben. Ein Kollektivsprung, der eine plötzliche Schubänderung des Rotors zur Folge hätte, findet nicht statt, so dass die Sicherung der Aktuatoren auch während eines Flugmanövers in Bodennähe gefahrlos erfolgen kann.

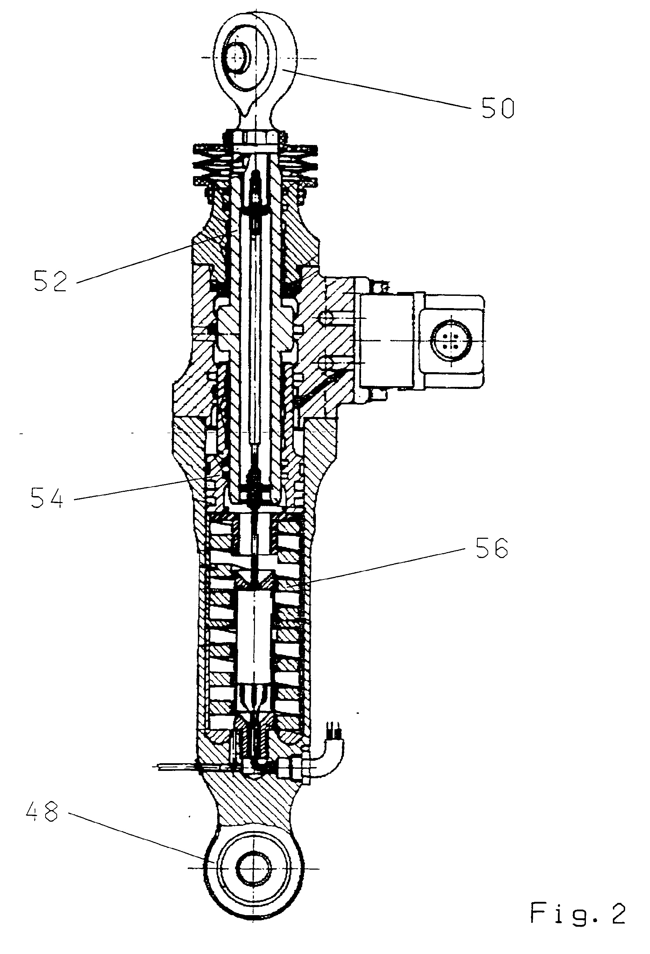

Fig. 2 zeigt einen Schnitt durch einen Aktuator, der in einer Endlage sicherbar ist. Darin ist mit 48 der Anschluss zur Taumelscheibe und mit 50 der Anschluss zum Blatthorn bezeichnet. Der Arbeitskolben 52 ist mit hydraulischem Druck beaufschlagbar, so dass sich infolge von zugeleiteten bzw. abgeführten Druckmittel-Volumina eine Veränderung des Abstands zwischen den beiden Anschlüssen 48, 50 ergibt. Soll der Aktuator in einer Endlage gesichert werden, so wird der Sicherungskolben 54 durch die Feder 56 verschoben, wobei der Aktuator seine Endlage einnimmt. Gegenüber einem Aktuator mit einer sogenannten Mittenverriegelung weist ein solcher Aktuator mit einer Endlagen-Sicherung einen einfacheren Aufbau auf und ist daher kleiner und leichter.

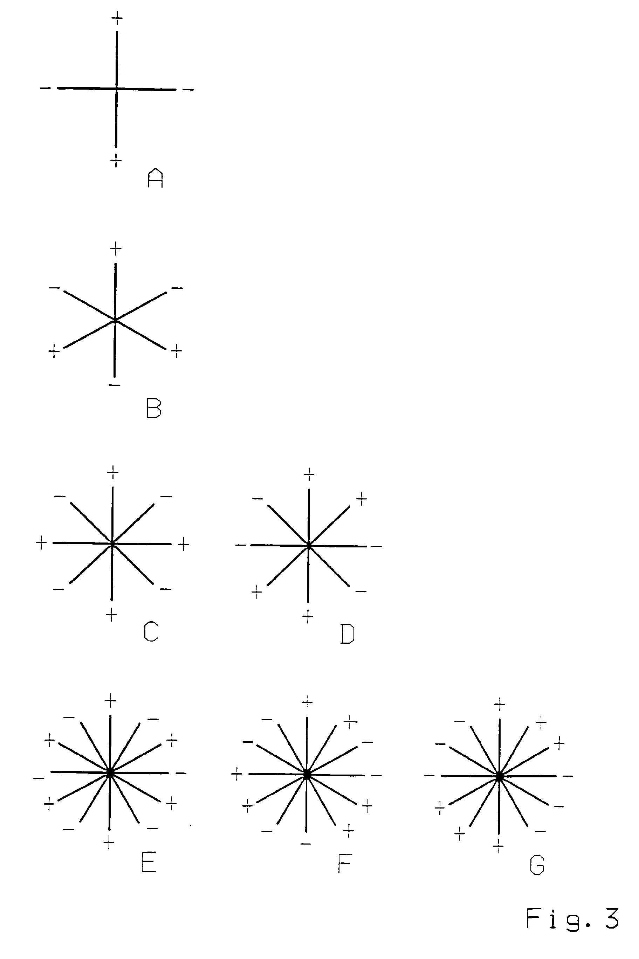

Die in Fig. 1 dargestellte Endlagen-Anordnung der Rotorblätter ist in Fig. 3B in der Draufsicht schematisch gezeigt. Hierbei ist jeweils eine positive Endlage (+) benachbart zu einer negativen Endlage (-) angeordnet. Auch bei dem in Fig. 3A dargestellten Fall mit vier Rotorblättern ist eine alternierende Endlagen-Anordnung die einzig mögliche Lösung, bei der keine umlaufenden Kippmomente auf den Rotorkopf übertragen werden. Bei acht Rotorblättern gibt es bereits zwei Lösungen (Fig. 3C, 3D) und bei zwölf Rotorblättern gibt es sogar drei mögliche Lösungen. Bei allen geraden Blattzahlen ab Vier erfüllt immer die alternierende Endlagen-Anordnung (siehe Fig. 3C, 3E) die Anforderungen. Bei geraden Blattzahlen größer Sechs ist es jedoch auch möglich, Untergruppen von Rotorblättern zu bilden, welche mehr als ein Rotorblatt umfassen und die jeweils gleichmäßig am Umfang der Rotornabe verteilt angeordnet sind, wobei benachbarte Untergruppen entgegengesetzte Richtungen der Einstellwinkel-Änderung aufweisen. Im Falle von acht Rotorblättern (Fig. 3D) umfassen diese Untergruppen jeweils zwei Rotorblätter. Bei zwölf Rotorblättern können diese Untergruppen jeweils zwei (Fig. 3F) oder drei Rotorblätter (Fig. 3G) umfassen.

### Bezugszeichen

- 2: Rotorkopf
- 4: Rotormast
- 6: Rotornabe
- 8, 10, 12, 14, 16, 18: Rotorblatt
- 20: Taumelscheibe (drehender Teil)
- 22, 24, 26, 28, 30, 32: Blatthorn
- 34: Anschluss
- 36, 38, 40, 42, 44, 46: Aktuator
- 48: Anschluss
- 50: Anschluss
- 52: Arbeitskolben
- 54: Sicherungskolben
- 56: Feder

## Patentansprüche

1. Individuelle Rotorblatt-Steuerungsvorrichtung für einen Hubschrauber-Hauptrotor (2) mit einem von einem Hauptgetriebe drehantreibbaren Rotormast (4), mit einer geraden Anzahl von mindestens vier gleichmäßig am Umfang einer Rotornabe (6) angeordneten Rotorblättern (8, 10, 12, 14, 16, 18), mit Primärsteuermitteln (20) zur kollektiven und sinusförmigen, zyklischen Rotorblatt-Verstellung, welche ein Übertragungsmittel für Steuerbewegungen von einem nichtdrehenden System in ein drehendes System aufweisen und mit den Rotorblättern (8, 10, 12, 14, 16, 18) individuell zugeordneten Aktuatoren (36, 38, 40, 42, 44, 46), deren Steuerbewegung der Steuerbewegung der Primärsteuermittel (20) überlagert ist, wobei jeder Aktuator ein Sicherungsmittel (54, 56) aufweist, um ihn bedarfsweise in eine Endlage zu bringen und in dieser festzuhalten, **dadurch gekennzeichnet, dass** die halbe Anzahl der Rotorblätter (8, 12, 16) einer ersten Gruppe und die halbe Anzahl der Rotorblätter (10, 14, 18) einer zweiten Gruppe von Rotorblättern zugeordnet sind, wobei die Einstellwinkel-Änderungen der ersten Gruppe von Rotorblättern (8, 12, 16) infolge der Sicherung der Aktuatoren (36, 40, 44) in ihren Endlagen entgegengesetzte Richtung aufweisen, wie die Einstellwinkel-Änderungen der zweiten Gruppe von Rotorblättern (10, 14, 18), und dass jede Gruppe von Rotorblättern aus mindestens zwei gleichmäßig am Umfang verteilten Untergruppen (8, 12, 16; 10, 14, 18) besteht, wobei benachbarte Untergruppen verschiedenen Gruppen zugeordnet sind.

2. Rotorblatt-Steuerungsvorrichtung nach Anspruch 1, **dadurch gekennzeichnet, dass** die Untergruppen (8, 12, 16; 10, 14, 18) jeweils nur ein Rotorblatt umfassen, so dass die Einstellwinkel-Änderungen benachbarter Rotorblätter infolge der Sicherung der Aktuatoren in ihren Endlagen entgegengesetzte Richtung aufweisen.

3. Rotorblatt-Steuerungsvorrichtung nach Anspruch 1 oder 2, **dadurch gekennzeichnet, dass** jeder der Aktuatoren (36 bis 46) als Linear-Aktuator mit zwei zueinander beweglichen Baugruppen ausgebildet ist, wobei jede Baugruppe einen Anlenkpunkt (48, 50) aufweist und die Anlenkpunkte in einer ersten Endlage minimalen Abstand und in einer zweiten Endlage maximalen Abstand voneinander aufweisen.

4. Rotorblatt-Steuerungsvorrichtung nach Anspruch 3, **dadurch gekennzeichnet, dass** den Rotorblättern (8, 12, 16) der ersten Gruppe Aktuatoren (36, 40, 44) zugeordnet sind, welche in der ersten Endlage festhaltbar sind, und den Rotorblättern (10, 14, 18) der zweiten Gruppe Aktuatoren (38, 42, 46) zugeordnet sind, welche in der zweiten Endlage festhaltbar sind.

5. Rotorblatt-Steuerungsvorrichtung nach Anspruch 3 oder 4, **dadurch gekennzeichnet, dass** das Sicherungsmittel ein parallel zur Stellrichtung des Aktuators expandierbares, elastisch vorgespanntes Element (56) aufweist, welches zwischen den beiden zueinander beweglichen Baugruppen des Aktuators angeordnet ist und dazu dient, die Baugruppen in eine Endlage zu bringen und in dieser festzuhalten.

6. Rotorblatt-Steuerungsvorrichtung nach Anspruch 5, **dadurch gekennzeichnet, dass** das vorgespannte Element eine Feder (56) ist.
